# EUROPÄISCHE PATENTSCHRIFT

(11) **EP 0 526 807 B1**
(45) Veröffentlichungstag und Bekanntmachung des Hinweises auf die Patenterteilung: **08.11.1995**
(21) Anmeldenummer: 92112543.1
(22) Anmeldetag: 22.07.1992
(51) Int. Cl.: B65G 53/24, G21C 21/02

(54) **Vorrichtung zur Pulverförderung**
Device for powder transporting
Dispositif pour le transport de poudre

(30) Priorität: 05.08.1991 DE 4125934
(43) Veröffentlichungstag der Anmeldung: 10.02.1993
(73) Patentinhaber: SIEMENS AKTIENGESELLSCHAFT, 80333 München (DE)
(72) Erfinder: Adelmann, Manfred, W-6454 Bruchköbel (DE); Heller, Gerhard, W-6450 Hanau (DE); Sandner, Herbert, W-6463 Freigericht 5 (DE); Schraudt, Rainer, W-8751 Kleinwallstadt (DE)

(56) Entgegenhaltungen:
- DE-A- 1 536 785
- DE-A- 2 751 640
- DE-A- 3 545 494
- DE-A- 3 744 270
- US-A- 1 883 715

## Beschreibung

Die Erfindung betrifft eine Vorrichtung zur Pulverförderung mit den im Oberbegriff des Anspruchs 1 angegebenen Merkmalen.

Um Pulver von einer entfernten Abgabestation in eine Sammelkammer einer Aufnahmestation zu befördern, kann in der Sammelkammer mittels einer Pumpe ein Unterdruck erzeugt werden, der am Vorderende einer an die Sammelkammer angeschlossenen Förderleitung als Saugdruck wirkt, um ein Fördergas anzusaugen, das das Pulver aus der Abgabestation mitreißt und in die Sammelkammer befördert, wo ein Pulverfilter das auf den Boden der Sammelkammer fallende Pulver von dem nach oben in die Ansaugleitung abgesaugten Fördergas trennt. Das Pulver kann dabei kontinuierlich nach dem Staubsaugerprinzip angesaugt werden, wobei es in der Förderleitung ein Fließbett oder Wirbelbett bildet. Für radioaktives Pulver, bei dem die Förderluft besonders sorgfältig entsorgt werden muß, kann auch eine "Pfropfenförderung" vorgesehen sein, wie sie insbesondere in der DE-A-35 45 494 beschrieben ist, der die Merkmale des Oberbegriffs des Anspruchs 1 entnommen sind.

Das zur Trennung des Pulvers vom Fördergas in der Sammelkammer erforderliche Pulverfilter wird von dem Pulverstaub nach verhältnismäßig kurzen Betriebszeiten zugesetzt, so daß die Ansaugpumpe nicht mehr in der Lage ist, den für den Betrieb erforderlichen Unterdruck in der Sammelkammer zu erzeugen.

Der Erfindung liegt die Aufgabe zugrunde, eine für die Trennung des Pulvers vom Fördergas besonders geeignete Auffangkammer zu schaffen, bei der das Pulverfilter einfach, automatisch, sicher und mit einem geringen zusätzlichen Gasvolumen von Zeit zu Zeit von angesaugtem Pulverstaub befreit werden kann.

Diese Aufgabe wird gelöst mit den Merkmalen des Anspruchs 1. Vorteilhafte Weiterbildungen sind in den Unteransprüchen gekennzeichnet.

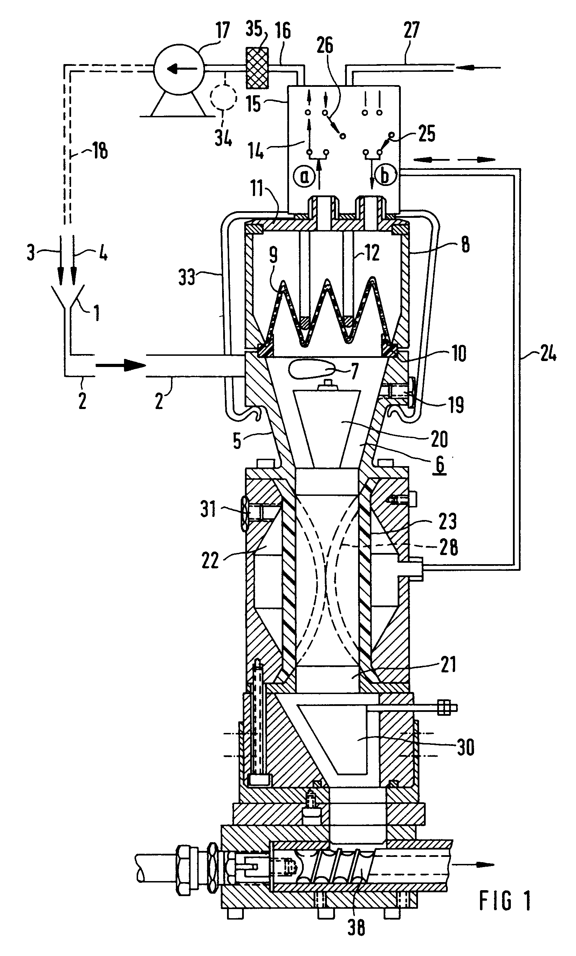

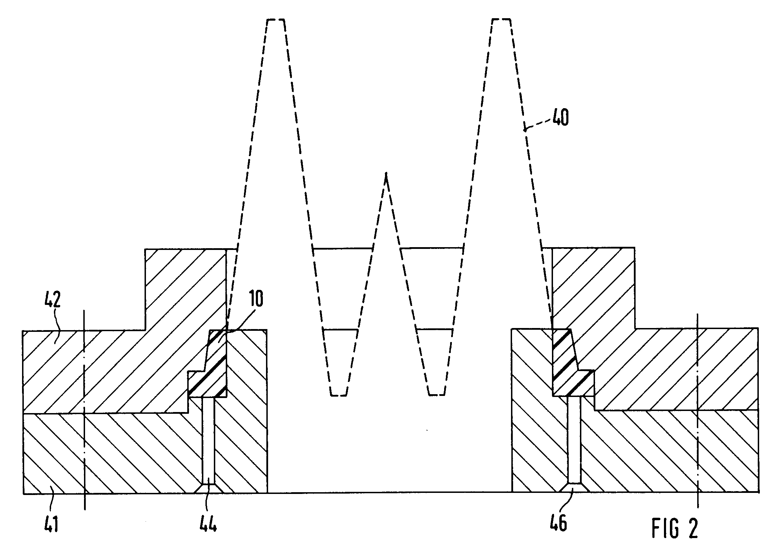

Anhand eines Ausführungsbeispiels, einer vor allem die Sammelkammer zeigenden Figur 1 und einer die Herstellung des Pulverfilters zeigenden Figur 2 wird die Erfindung näher erläutert.

In Figur 1 ist mit 1 das Vorderende der Förderleitung 2 bezeichnet, in das Pulver 3, insbesondere Kernbrennstoffpulver, und Fördergas 4 eingeleitet wird. Das Hinterende der Förderleitung 2 ist an die Sammelkammer 6 angeschlossen und mündet mit einer Durchtrittsöffnung 7 in der Seitenwand 5 vorzugsweise tangential in die Sammelkammer. Auf der Seitenwand 5 sitzt ein Oberteil 8, das gegenüber dem Innenraum im unteren Teil der Sammelkammer 6 durch ein Pulverfilter 9 abgeteilt ist.

Dieses Pulverfilter besteht vorzugsweise aus einem mehrlagigen Gewebe, z.B. einem Textilstoff, der unter dem Warenzeichen "Goretex" bekannt ist. Aus diesem Gewebe ist ein Filtertopf oder eine Filtertüte gebildet, die einen der Seitenwand 5 angepaßten, flanschartigen Rand 10 aufweist. Während die Seitenflächen dieses Filtertopfes bzw. dieser Filtertüte auf die Deckplatte 11 der Sammelkammer gerichtet sind, ist der Rand vorzugsweise aus einem dauerelastischen Kunststoff (z.B. einer Mischung aus einer Silicongummi-Paste und einem Härter) gegossen, in den der Saum des das Pulverfilter bildenden Gewebes eingegossen sein kann. Um bei einem möglichst geringen Volumen der Sammelkammer eine große Filterfläche zu erreichen, kann der Boden des Filtertopfes gefaltet sein, wobei zusätzlich von der Deckplatte 11 nach unten ragende Stege 12 die Falten stützen können.

Von dem durch das Pulverfilter abgetrennten Oberteil der Sammelkammer führt ein Ansatz 13, der insbesondere an der Deckplatte 11 angebracht sein kann, über die Stellung 14 eines Mehr-Wege-Ventils 15 zur Ansaugleitung 16 einer Ansaugpumpe 17, deren Gasableitung 18 zurück zur Abgabestation führen kann, um einen im wesentlichen geschlossenen Kreislauf des Fördergases zu erreichen. Dabei können die Abgabestation und die Auffangstation jeweils von einem Handschuhkasten umgeben sein, in dem jeweils ein Unterdruck aufrechterhalten wird, um auch bei Undichtigkeiten des Fördersystems einen Pulveraustritt zu vermeiden.

Der Unterdruck in der Sammelkammer kann durch ein in einer Bohrung 19 eingesetztes Druckmeßgerät kontrolliert werden. Eine Füllstandsanzeige 20, die z.B. kapazitiv arbeiten kann, kann anzeigen, wann die Sammelkammer unterhalb der Durchtrittsöffnung 7 weitgehend mit Pulver gefüllt ist und entleert werden muß.

Zu diesem Zweck ist am Boden der Sammelkammer ein Pulverdurchlaßventil angeordnet, das die Sammelkammer gegenüber einer darunter liegenden Auffangkammer 21 abteilt.

Das Pulverdurchlaßventil weist vorteilhaft eine die Sammelkammer ringförmig umgebende Druckkammer 22 auf, die gegenüber dem unteren Teil der Sammelkammer durch eine schlauchförmige Membran 23 aus einem elastischen Material abgeschlossen ist. Von der Druckkammer führt eine Druckgaszuleitung 24 zum Mehr-Wege-Ventil 15, das entsprechend der Stellung 26 die Druckgaszuleitung 24 mit einer Druckleitung 27 verbindet. Dadurch wird in der Druckkammer 22 ein Überdruck erzeugt, der die Membran 23 in die mit durchbrochenen Linien gezeigte Sperr-Stellung 28 bringt, bei der daher der Boden der Sammelkammer durch die Membran dicht verschlossen ist. In der durch die Pfeile 14 und 26 dargestellten Stellung (a) des Mehr-Wege-Ventils 15 wird also die Sammelkammer abgesaugt und das angesaugte Pulver in der Sammelkammer unterhalb des Filters gesammelt.

Von Zeit zu Zeit ist nun ein Spülen des Pulverfilters 9 vorgesehen. Dazu kann das durch den Pfeil 14 im Mehr-Wege-Ventil symbolisierte Absaugen von Fördergas durch Stillsetzen der Pumpe 17 und/oder ein Sperrventil unterbrochen werden. Die Erfindung sieht aber vor, daß jedenfalls entsprechend dem Pfeil 25 die Druckgaszuleitung 24 mit der Ansaugseite des Filters (also dem Innenraum des Oberteils 8) verbunden wird. Dabei kann vorzugsweise die Druckleitung 27 abgesperrt werden. Auch ist in dieser Ventilstellung (b) zweckmäßig zur Vermeidung hoher Drücke keine Verbindung zwischen der Druckleitung 27 und der Sammelkammer herstellbar. Das in der Druckkammer 22 gesammelte Druckgas wird also zum Spülen des Pulverfilters verwendet, das auf diese Weise in Umkehrung der normalen Strömungsrichtung von dem Druckgas durchspült wird. Dadurch wird das Pulverfilter "freigeblasen". Die Ansaugöffnung und der Druckluftauslaß am Pulverfilter können dabei als auf die Falten des Filters gerichtete Düsen ausgebildet sein.

Durch das jetzt in die Sammelkammer eingeleitete Druckgas steigt der Druck in der Sammelkammer nur geringfügig an, da die Sammelkammer durch das nunmehr geöffnete Filterdurchlaßventil mit der Auffangkammer 21 verbunden ist, so daß praktisch nur die Anlage geflutet wird.

Mit dieser Vorrichtung erfolgt also immer dann, wenn die Sammelkammer durch Betätigen des Mehr-Wege-Ventils entleert wird, automatisch ein Freiblasen des Filters. Gleichzeitig wird auch die Förderleitung 2 selbst geflutet, so daß sich eine Verstopfung dieser Leitung durch einen Pulverpfropfen löst.

Ein verstopftes Filter führt zu einem steigenden Druck (geringeren Unterdruck) in der Sammelkammer und kann über das Manometer in der Bohrung 19 (oder durch Messen eines wachsenden Druckabfalls am Filter) erfaßt werden. Eine Verstopfung der Förderleitung zeigt sich an einem wachsenden Unterdruck in der Ansaugkammer (oder einem verschwindenden Druckabfall am Filter). Zur Messung des Druckabfalls oder zur Messung der von der Pumpe angesaugten Gasmenge können weitere Meßgeräte (durch 34 angedeutet) vorgesehen sein. Sollte das Pulverfilter reißen, so kann in der Ansaugleitung bei hohen Sicherheitsbedürfnissen ein weiteres Filter 35 angebracht sein.

Verstopfungen können also durch Überwachung des Drucks detektiert werden, um bei Überschreitungen entsprechender Grenzwerte über das Mehr-Wege-Ventil die Anlage zu fluten. Anschließend wird die Ventilstellung (a) wieder erzeugt und die Pumpe betrieben. Sollte ein einmaliges Öffnen des Pulverdurchlaßventils nicht ausreichen, die Verstopfung zu lösen, so kann das Öffnen mehrmals wiederholt werden. Der Sammelkammer werden also über das Pulverventil nur kleine Portionen Druckgas zugeführt, wodurch sich die Sicherheit erhöht.

Vorteilhaft wird als Förderleitung ein elastischer Schlauch verwendet. Er gerät durch das an seinem Vorderende zugeführte Fördergas ins Vibrieren und zeigt dadurch an, an welcher Stelle der Leitung ein Pulverpfropfen sitzt. Gleichzeitig wird dadurch aber ein derartiger Pfropfen gelockert, so daß Verstopfungen selten sind.

In der Auffangkammer 21 kann eine weitere Füllstandsanzeige 30 angeordnet sein, die die Förderung des Pulvers unterbricht, wenn mehr Pulver gefördert wird, als in einer nachfolgenden Verarbeitungseinrichtung, z.B. einer zu einer Pulverpresse führenden Förderschnecke 38, weiterverarbeitet werden kann.

Um ein Bersten der Membran 23 zu vermeiden, kann ein in einer Bohrung 31 eingsetztes Druckmeßgerät den Druck der Druckkammer 22 messen, der gleichzeitig auch den geöffneten oder gesperrten Zustand des Pulverventils anzeigt. Damit bei einem Bersten der Membran 23 nicht auch das Pulverfilter 9 zerstört wird und Pulver in die Pumpe 17 und ihr Leitungssystem 16, 18 gerät, ist zwischen dem Oberteil 8 und der Seitenwand 5 der Sammelkammer eine Soll-Bruchstelle vorgesehen. Diese Bruchstelle wird dadurch gebildet, daß das Oberteil 8 an der Seitenwand 5 durch einen oder mehrere Bügel 33 zusammengehalten werden, die diese Teile umgreifen und nur so stark ausgelegt sind, daß sie bei einem gewissen Überdruck ein Abheben des Oberteils 8 gestatten. Die Abdichtung dieser Bruchstelle kann vorteilhaft durch den flanschartigen Rand 10 erfolgen, der mit einer Dichtfläche an seiner Unterseite auf dem oberen Rand der Seitenwand 5 und mit einer entsprechenden Dichtfläche auf seiner Oberseite an dem unteren Rand des Oberteils anliegt. Dieser Rand aus Kunstharz, in den das Gewebe des Pulverfilters 9 eingegossen ist, ist verhältnismäßig elastisch und ermöglicht einerseits eine gute Abdichtung, hält andererseits auch das Gewebe in der vorgegebenen topfartigen oder tütenartigen Form.

Dieser Filter ist ein Verschleißteil der Anlage und kann vorteilhaft entsprechend Figur 2 dadurch hergestellt werden, daß das mehrschichtige Gewebe 40 in die gewünschte Form gebracht und mit seinem Rand in eine zweiteilige Form 41, 42 gelegt wird, zwischen deren beiden Teilen ein dem gewünschten Flansch 10 entsprechender Füllraum entsteht. Über Bohrungen 44 kann die Mischung mit einem der gewünschten Elastizität angepaßten Mischungsverhältnis von Kunstharz und Härter unter Druck eingegossen werden, während weitere Bohrungen 46 ein Entweichen der verdrängten Luft ermöglichen.

Insbesondere kann die erfindungsgemäße Vorrichtung zur Pulverförderung bei Anlagen und Verfahren angewendet werden, wie sie in den gleichzeitig eingereichten Patentanmeldungen "Verfahren und Vorrichtung zum Fördern von Pulver", "Vorrichtung mit Abzweigungen zur Pulverförderung", "Verfahren und Vorrichtung zum Fördern von Pulver von einer Abgabestation zu einer Auffangstation" des gleichen Anmelders beschrieben werden.

## Patentansprüche

1. Vorrichtung zur Pulverförderung mit einer Förderleitung (2), die von einem Ansaugraum für Pulver und Fördergas zu einer Durchtrittsöffnung (7) in einer Seitenwand (5) einer Sammelkammer (6) führt, einem Pulverfilter (9), das einen oberhalb der Durchtrittsöffnung liegenden Oberteil (8) der Sammelkammer abtrennt, einer vom Oberteil zu einer Saugpumpe (17) führenden Ansaugleitung (16) zum Erzeugen einer Druckdifferenz zwischen dem Ansaugraum und der Sammelkammer und einem mit einer Druckkammer (22) verbundenen Pulverdurchlaßventil (23), das bei einem erhöhten Druck in der Druckkammer (22) den Boden der Sammelkammer (6) verschließt,
**dadurch gekennzeichnet,** daß die Druckkammer (22) über ein Mehr-Wege-Ventil (15) alternativ mit einer Druckleitung (27) oder mit dem Oberteil (8) der Sammelkammer verbunden ist.

2. Vorrichtung nach Anspruch 1,
**dadurch gekennzeichnet,** daß die Förderleitung (2) tangential in die Sammelkammer (6) mündet.

3. Vorrichtung nach Anspruch 1 oder 2,
**dadurch gekennzeichnet,** daß das Pulverfilter (9) als Filtertopf (40) oder Filtertüte mit einem an der Seitenwand der Sammelkammer (6) gehaltenen, flanschartigen Rand (10) und auf eine Deckplatte (11) des Oberteils (8) gerichteten Seitenflächen ausgebildet ist.

4. Vorrichtung nach Anspruch 3,
**dadurch gekennzeichnet,** daß der Boden des Filtertopfes (40) oder die Seitenflächen der Filtertüte gefaltet sind und die Abdeckplatte (11) nach unten gerichtete Stege (12) zur Unterstützung der Falten aufweist.

5. Vorrichtung nach Anspruch 3,
**dadurch gekennzeichnet,** daß eine untere Dichtfläche des flanschartigen Randes (10) von oben auf die die Durchlaßöffnung (7) tragende Seitenwand (15) und auf eine obere Dichtfläche des flanschartigen Randes (10) das Oberteil (8) aufgesetzt ist und daß Seitenwand, Pulverfilter und Oberteil durch einen oder mehrere die Seitenwand und das Oberteil umgreifende Bügel (33) zusammengehalten sind.

6. Vorrichtung nach einem der Ansprüche 3 bis 5,
**dadurch gekennzeichnet,** daß der Filtertopf (9) oder die Filtertüte aus einem mehrlagigen Textilgewebe und einem dauerelastischen Kunststoff als Rand, in den das Gewebe eingegossen ist, besteht.

7. Vorrichtung nach einem der Ansprüche 1 bis 6,
**dadurch gekennzeichnet,** daß als Förderleitung (2) ein elastischer Schlauch verwendet ist.

## Claims

1. Apparatus for transporting powder, having a conveyor pipeline (2) which leads from a suction space for powder and delivery gas to an opening (7) in a side wall (5) of a collecting chamber (6), a powder filter (9) which separates an upper part (8) of the collecting chamber that is located above the opening, a suction pipe (16) leading from the upper part to a suction pump (17) for generating a pressure difference between the suction space and the collecting chamber, and a powder outlet valve (23) which is connected to a pressure chamber (22) and which closes off the base of the collecting chamber (6) when there is an increase in pressure in the pressure chamber (22), characterised in that, by way of a multi-way valve (15), the pressure chamber (22) is connected alternatively to a pressure pipe (27) or to the upper part (8) of the collecting chamber.

2. Apparatus according to claim 1, characterised in that the conveyor pipeline (2) opens tangentially into the collecting chamber (6).

3. Apparatus according to claim 1 or 2, characterised in that the powder filter (9) is formed as a filter pot (40) or a filter bag having a flange-shaped edge (10) held on the side wall of the collecting chamber (6) and side surfaces facing towards a cover plate (11) of the upper part (8).

4. Apparatus according to claim 3, characterised in that the base of the filter pot (40) or the side surfaces of the filter bag are folded and the cover plate (11) has downwardly-directed webs (12) for supporting the folds.

5. Apparatus according to claim 3, characterised in that a lower sealing surface of the flange-shaped edge (10) is placed from above on to the side wall (15) (sic) having the opening (7) and on to an upper sealing surface of the flange-shaped edge (10), and in that the side wall, the powder filter and the upper part are held together by means of one or more clips (33) embracing the side wall and the upper part.

6. Apparatus according to one of claims 3 to 5, characterised in that the filter pot (9) or the filter bag consists of a multi-layer textile fabric and of a permanently elastic plastics material as the edge into which the fabric is integrally cast.

7. Apparatus according to one of claims 1 to 6, characterised in that an elastic tube is used as the conveyor pipeline (2).

## Revendications

1. Dispositif pour convoyer de la poudre comportant une canalisation d'entraînement (2), qui relie un espace d'aspiration pour la poudre et le gaz d'entraînement à une ouverture de traversée (7) ménagée dans une paroi latérale (5) d'une chambre de collecte (6), un filtre à poudre (9), qui sépare une partie supérieure (8) de la chambre de collecte, située au-dessus de l'ouverture de traversée, une canalisation d'aspiration (16) qui relie la partie supérieure à une pompe aspirante (17) pour produire une différence de pression entre l'espace d'aspiration et la chambre de collecte, et une soupape (23) de passage de la poudre, qui est reliée à une chambre de pression (22) et qui, dans le cas d'une pression accrue dans la chambre de pression (22), ferme le fond de la chambre de collecte (6), caractérisé par le fait que la chambre de pression (22) est reliée alternativement, par l'intermédiaire d'une soupape à voies multiples (15), à une canalisation de pression (27) ou à la partie supérieure (8) de la chambre de collecte.

2. Dispositif suivant la revendication 1, caractérisé par le fait que la canalisation d'entraînement (2) débouche tangentiellement dans la chambre de collecte (6).

3. Dispositif suivant la revendication 1 ou 2, caractérisé par le fait que le filtre à poudre (9) est agencé sous la forme d'un pot filtrant (40) ou d'un sac filtrant comportant un bord en forme de bride (10), qui est retenu sur la paroi latérale de la chambre de collecte (6), et des surfaces latérales dirigées sur une plaque de fermeture (11) de la partie supérieure (8).

4. Dispositif suivant la revendication 3, caractérisé par le fait que le fond du pot filtrant (14) ou les surfaces latérales du sac filtrant sont repliées et que la plaque de fermeture (11) comporte des barrettes (12) dirigées vers le bas et servant à supporter les plis.

5. Dispositif suivant la revendication 3, caractérisé par le fait qu'une surface inférieure d'étanchéité du bord en forme de bride (10) est posée à partir du haut sur la paroi latérale (15), qui porte l'ouverture de traversée (7), que la partie supérieure (8) est posée sur une surface supérieure d'étanchéité du bord en forme de bride (10), et que la paroi latérale, le filtre à poudre et la partie supérieure sont maintenus assemblés par un ou plusieurs étriers (33) qui enserrent la paroi latérale et la partie supérieure.

6. Dispositif suivant l'une des revendications 3 à 5, caractérisé par le fait que le pot filtrant (9) ou le sac filtrant est constitué par un tissu textile à plusieurs couches et par une matière plastique à élasticité permanente constituant le bord et dans laquelle le tissu est enrobé.

7. Dispositif suivant l'une des revendications 1 à 6, caractérisé par le fait qu'un tuyau élastique est utilisé en tant que canalisation d'entraînement (2).
